## Europäisches Patentamt
### European Patent Office
### Office européen des brevets

(19)

(11) Numéro de publication: **0 104 994**
**B1**

(12) **FASCICULE DE BREVET EUROPÉEN**

(45) Date de publication du fascicule du brevet:
**10.06.87**

(51) Int. Cl.⁴: **G 21 D 5/08, G 21 D 1/04**

(21) Numéro de dépôt: **83401832.7**

(22) Date de dépôt: **20.09.83**

(54) Circuit caloporteur secondaire pour un réacteur nucléaire à métal liquide.

(30) Priorité: **22.09.82 FR 8215958**

(43) Date de publication de la demande:
**04.04.84 Bulletin 84/14**

(45) Mention de la délivrance du brevet:
**10.06.87 Bulletin 87/24**

(84) Etats contractants désignés:
**BE DE GB IT NL**

(56) Documents cité:
**EP-A-0 014 662
FR-A-1 518 393
FR-A-2 379 881**

**ENERGIE NUCLEAIRE, vol. 12, no. 1, janvier-février 1970. E. V. BORISIOUK et al.: "Le réacteur expérimental rapide BOR", pages 33-38
NUCLEAR ENGINEERING INTERNATIONAL, vol. 20, no. 231, juin-juillet 1975. S. RIPPON: "BN 600 status report", pages 551-555
KERNTECHNIK, vol. 7, no. 10, octobre 1965. H. HEBEL et al.: "Sicherheitsaspekte beim 20-MW-Versuchskraftwerk KNK", pages 433-441**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Brachet, Alain, 34, Avenue Saint Laurent, F-91400 Arsay (FR)**
Inventeur: **Figuet, Jacques, 6, rue Paul Bert, F-13100 Aix en Provence (FR)**
Inventeur: **Guidez, Joel, Lotissement les Grands Pins, F-30330 Connaux (FR)**
Inventeur: **Lions, Noel, 233, Montée de Toutes Aures, F-04100 Manosque (FR)**

(74) Mandataire: **Mongrédien, André, c/o BREVATOME 25, rue de Ponthieu, F-75008 Paris (FR)**

## Description

La présente invention concerne un circuit caloporteur secondaire pour un réacteur nucléaire refroidi par un métal liquide tel que du sodium.

Dans l'état actuel de la technique, les centrales nucléaires à neutrons rapides comprennent habituellement un circuit primaire dans lequel le sodium extrait le chaleur produite par les éléments combustibles du coeur pour la transporter jusqu'à un échangeur de chaleur dans lequel il cède sa chaleur à du sodium contenu dans un circuit caloporteur secondaire. Le sodium chaud sortant de l'échangeur dans ce circuit secondaire transporte la chaleur jusqu'à un générateur de vapeur dans lequel il cède à son tour sa chaleur à de l'eau sous pression contenue dans un circuit caloporteur tertiaire alimentant en vapeur une turbine afin de produire de l'électricité.

Selon une conception dite de réacteur intégré, le circuit caloporteur primaire est intégré en totalité dans une cuve contenant à la fois le coeur du réacteur, les échangeurs et les pompes de circulation du circuit primaire, ainsi que l'ensemble du sodium liquide contenu dans ce circuit. Les échangeurs de chaleur étant au nombre de trois ou quatre, le circuit caloporteur secondaire, externe à la cuve du réacteur, est divisé le plus souvent en trois ou quatre boucles identiques. Il en est de même du circuit caloporteur tertiaire.

Dans les centrales nucléaires à neutrons rapides réalisées actuellement, l'existence d'un circuit caloporteur secondaire se justifie par la nécessité de confiner avec une grande sûreté le sodium primaire radioactif et parce qu'il est essentiel de protéger le circuit primaire des répercussions éventuelles d'une fuite de la surface d'échange thermique du générateur de vapeur.

En effet, dans une telle éventualité, de l'eau ou de la vapeur sous haute pression entre en contact avec le sodium. La réaction chimique qui se produit alors est très exothermique et libère des produits de réaction corrosifs et dangereux (soude caustique, hydrogène). Il convient donc de protéger le coeur, c'est-à-dire le circuit primaire, des contrecoups possibles de cette réaction sodium/eau (surpression, pollution par la soude).

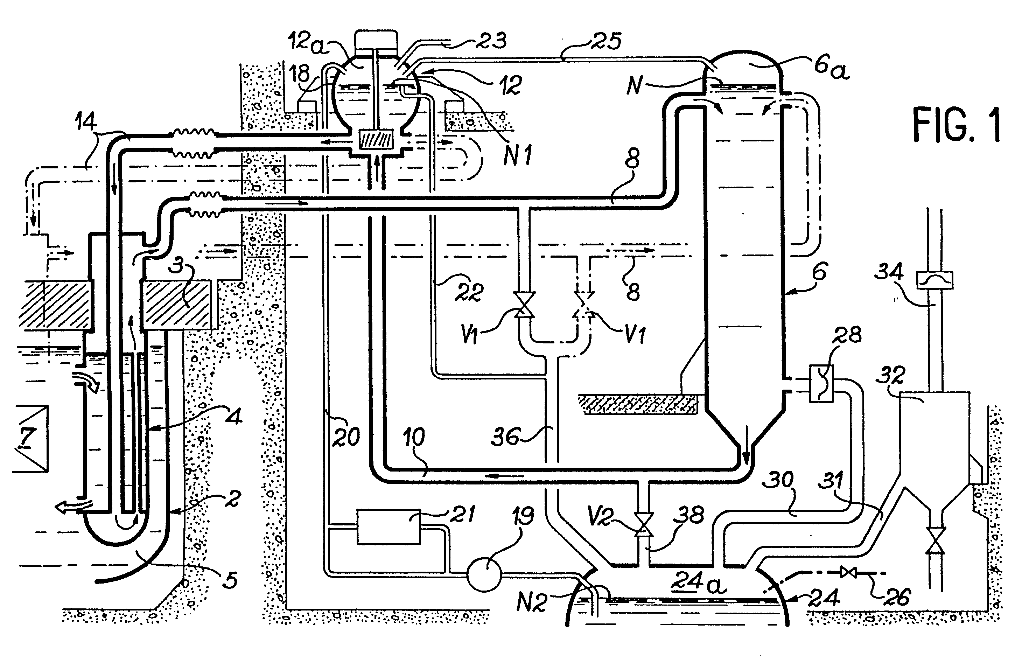

Sur la figure 1, on a représenté la structure habituelle d'une boucle secondaire de refroidissement d'un réacteur nucléaire à neutrons rapides. Cette boucle comprend, dans l'exemple de réalisation représenté en trait plein, un échangeur de chaleur 4 et, dans l'exemple de réalisation représenté en traits discontinus, un autre échangeur de chaleur. Les échangeurs 4 sont disposés dans la cuve 2 obturée par une dalle 3 et, contenant le coeur 7 du réacteur et l'ensemble du circuit caloporteur primaire. En particulier, la cuve 2 est remplie de sodium liquide 5. La sortie de chaque échangeur 4 est raccordée à un générateur de vapeur 6 par une conduite aller 8. Le générateur de vapeur comporte à sa partie superieure une poche d'argon 6a gui définit un niveau libre N de sodium. La sortie du générateur de vapeur 6 est raccordée par une conduite 10 à l'orifice d'aspiration d'une pompe de circulation 12 dont chaque orifice de refoulement est raccordé par une conduite 14 à l'entrée d'un échangeur 4.

Dans une telle boucle secondaire de refroidissement de conception classique, l'étanchéité de la traversée de l'arbre de la pompe est réalisée au moyen d'une garniture mécanique qui est au contact d'un gaz neutre tel que de l'argon interposé entre le sodium et la garniture. A cet effet, la surface libre N1 du sodium est surmontée d'une poche d'argon 12a. De plus, afin que le niveau de sodium N1 ne puisse pas remonter intempestivement jusqu'à la garniture, le rotor de la pompe est placé dans un réservoir d'expansion 18 dont la taille est suffisante pour absorber sans noyage de la garniture toutes les augmentations envisageables du volume de sodium dans la boucle secondaire (par dilatation thermique). Enfin, afin d'éviter tout risque de noyage de la garniture qui pourrait intervenir en cas de fuite de l'argon surmontant le sodium dans le réservoir 18, celui-ci est placé au point le plus haut du circuit.

Une conduite 20 d'appoint en sodium relie un réservoir de stockage 24 placé à la partie inférieure de l'installation à la partie supérieure du réservoir 18. Cette conduite 20 est équipée d'une pompe de circulation 19 et d'un système de purification 21 du sodium. Elle permet notamment de compenser une fuite éventuelle de la vanne de vidange V2 qui est située dans la conduite de vidange 38 de la conduite 10. Dans le sens inverse, toute montée intempestive du niveau libre N1 du sodium dans le réservoir 18 est compensée par une conduite de trop-plein 22 qui relie le réservoir 18 à la conduite 36 en dessous des vannes de vidange V1 situées dans les conduites de vidange 36 des conduites 8.

La pression d'argon dans le réservoir 18 est contrôlée par une tubulure d'admission 23. De même, le niveau libre N2 du sodium dans le réservoir 24 est surmonte d'un ciel d'argon 24a dont la pression est contrôlée par une tubulure 26. De plus, les ciels d'argon 6a et 12a du générateur et de la pompe communiquent par une conduite d'équilibrage 25 des niveaux N et N1 et des pressions.

Comme l'illustre toujours la figure 1, le réservoir 24 sert également à la récupération éventuelle des produits résultant d'une réaction sodium/eau en cas de fuite dans le générateur de vapeur 6. A cet effet, une conduite 30 relie la partie inférieure du générateur de vapeur 6 à la partie supérieure du réservoir 24. Cette canalisation est normalement obturée par des membranes d'éclatement 28, de grand diamètre, qui se rompent sous l'effet des surpressions dues à la réaction sodium-eau et permettent ainsi la décompression de la boucle secondaire. Dans ce cas, le réservoir 24 assure la séparation des produits liquides et gazeux résultant de la réaction sodium/eau. Toutefois, cette fonction peut être également assurée par un second séparateur 32, par exemple du type cyclone, communiquant avec le réservoir 24 par une conduite 31 et muni d'une cheminée de rejet 34 à l'atmosphère des seuls produits gazeux (hydrogène, argon, vapeur d'eau).

En complément à ces moyens permettant de récupérer les produits de la réaction sodium/eau pouvant se produire dans le générateur de vapeur, des moyens sont prévus pour amortir les chocs dans le circuit secondaire à l'amont et à l'aval du générateur de vapeur, afin que ceux-ci ne soient pas transmis jusqu'aux échangeurs de chaleur 4. A l'amont de la zone d'échange du générateur de vapeur 6, ces moyens sont constitués par la poche d'argon 6a formée à l'intérieur même du générateur de vapeur et à la partie supérieure de celui-ci. Cette poche d'argon 6a joue alors le rôle d'un réservoir tampon amont. A l'aval du générateur de vapeur, le réservoir tampon aval se confond avec le réservoir d'expansion 18 de la pompe, comportant le ciel d'argon 12a.

La boucle secondaire de la technique antérieure qui vient d'être décrite présente un certain nombre d'inconvénients qui résultent principalement de la nécessité de placer la pompe à la partie supérieure de l'installation et de la disposition du rotor de la pompe dans un réservoir d'expansion 18 de grande taille.

Ainsi, la position haute de la pompe place celle-ci dans de mauvaises conditions hydrauliques d'aspiration qui imposent d'adopter une faible vitesse de rotation, donc une roue de grand diamètre et un moteur d'entraînement lent pour éviter la cavitation. L'ensemble est encombrant et coûteux car on sait que le prix d'une pompe croît comme le carré de son diamètre. Parallèlement, le réservoir d'expansion entourant la pompe est lourd et coûteux. De plus, la conjugaison du poids de l'ensemble pompe-réservoir avec sa disposition en partie haute de l'installation nécessite une structure de supportage importante notamment pour remédier aux sollicitations sismiques éventuelles qui tendent à croître au fur et à mesure que l'on s'élève. En outre, compte tenu de l'implantation des différents éléments de la boucle et de la nécessité de pouvoir vidanger celle-ci par gravité, les tuyauteries équipant l'installation sont particulièrement longues et encombrantes. Enfin, la disposition du réservoir d'expansion est telle qu'il forme un système de vases communiquant avec le générateur de vapeur. En cas de réaction sodium/eau dans ce dernier, il se produit alors des oscillations de grande amplitude que le réservoir d'expansion peut difficilement contenir.

Afin de remédier à ces inconvénients, on a proposé dans la demande de brevet européenne EP-A1 0014662 de supprimer le réservoir d'expansion entourant la pompe et de placer celle-ci dans la partie basse de l'installation, juste au-dessue du réservoir de stockage. Cette solution est rendue possible en introduisant le réservoir de stockage dans la partie active de la boucle secondaire et en lui faisant jouer simultanément les rôles de réservoir anti-bélier aval et de réservoir d'expansion. Toutefois, elle nécessite d'équilibrer la pression de sodium dans la totalité de la boucle secondaire en plaçant le ciel d'argon surplombant le sodium dans le réservoir de stockage à une pression suffisante. En pratique, cette pression doit être d'environ trois bars relatifs.

Cette solution connue présente l'avantage de placer la pompe dans des conditions de fonctionnement hydraulique satisfaisantes, mais l'utilisation d'un réservoir de stockage pressurisé, muni de tuyauteries plongeantes conduit à accroître de façon importante les risques résultant de l'utilisation du sodium comme fluide de refroidissement. En particulier, en cas de fuite dans le circuit, les débits de fuite se trouvent sensiblement accrus, de même que les risques de feu de sodium pulvérisé. Parmi les autres inconvénients d'une telle solution, on citera aussi l'impossibilité d'isoler le réservoir de stockage du reste du circuit et l'existence de phénomènes transitoires délicats par inversion du sens du débit de fuite dans la pompe. De plus, il est certain que la multiplication des fonctions remplies par le réservoir de stockage rend particulièrement délicat le contrôle des phénomènes thermohydrauliques qui se produisent dans ce réservoir et du chargement thermomécanique correspondant.

La présente invention a précisément pour objet un circuit caloporteur secondaire ne présentant pas les inconvénients des circuits caloporteurs secondaires connus à ce jour.

A cet effet, il est proposé un circuit caloporteur secondaire de réacteur nucléaire refroide par métal liquide, comprenant au moins un échangeur de chaleur logé dans la cuve du réacteur, un générateur de vapeur vertical extérieur à ladite cuve, une conduite aller reliant une tubulure de sortie de chaque échangeur de chaleur à au moins une tubulure d'entrée du générateur de vapeur, une conduite retour reliant au moins une tubulure de sortie du générateur de vapeur à une tubulure d'entrée de chaque échangeur de chaleur, une pompe de circulation d'un métal liquide secondaire contenu dans ledit circuit, disposée dans la conduite retour, un réservoir tampon amont disposé dans ledit circuit en amont de la zone d'échange du générateur de vapeur, et un réservoir de stockage du métal liquide secondaire jouant aussi le rôle d'un réservoir tampon aval disposé en aval de la zone d'échange du générateur de vapeur et mis en communication avec le reste du circuit des moyens étant prévus pour établir une première pression de gaz neutre au-dessus du niveau libre de métal liquide secondaire contenu dans le réservoir de stockage et dans le réservoir tampon amont, caractérisé en ce qu'un réservoir tampon aval est disposé dans la conduite retour entre le générateur de vapeur et la pompe de circulation, à proximité immédiate de la tubulure de sortie du générateur de vapeur, des moyens étant prévus pour établir une deuxième pression de gaz neutre au-dessus du niveau libre de métal liquide secondaire contenu dans le réservoir tampon aval, cette deuxième pression étant supériende à ladite première pression.

Grâce à ces caractéristiques, le réservoir d'expansion peut être supprimé et la pompe peut être placée en partie basse sans qu'il soit nécessaire de placer le circuit sous une pression d'argon élevée et sans que le réservoir de stockage ne soit introduit dans la boucle secondaire proprement dite. Il en résulte notamment une diminution sensible de l'encombrement et du coût de l'installation, une amélioration de la protection des échangeurs de chaleur en cas de réaction sodium/eau dans le générateur de vapeur, et des conditions de fonctionnement satisfaisantes du point de vue de la sûreté (basse pression) ainsi que pour le fonctionnement de la pompe.

Dans une première variante de réalisation de l'invention, la pompe de circulation est une pompe mécanique à aspiration axiale comportant un corps de pompe et un moteur commandant la rotation d'un rotor dans le corps de pompe par l'intermédiaire d'un arbre vertical traversant une garniture hydraulique solidaire du corps de pompe, le métal liquide secondaire définissant un niveau libre surmonté d'un ciel de gaz neutre dans la partie du corps de pompe située au-dessus de ladite garniture, ce ciel de gaz neutre étant relié auxdits moyens pour établir la deuxième pression de gaz neutre.

> De préférence, le circuit comprend alors de plus des moyens de régulation du niveau du métal liquide secondaire dans le corps de pompe, ces moyens de régulation comportant une canalisation d'alimentation reliant le réservoir de stockage à la conduite retour en amont de la pompe, une canalisation d'évacuation reliant un trop plein formé dans le corps de pompe au-dessus de la garniture hydraulique au réservoir de stockage, et des moyens pour faire circuler en permanence le métal liquide secondaire dans lesdites canalisations d'alimentation et d'évacuation, afin de pouvoir fonctionner avec une fuite permanente de métal liquide secondaire au travers de la garniture hydraulique de la pompe vers le réservoir de stockage.

Selon une deuxième variante de réalisation de l'invention, la pompe de circulation est une pompe électromagnétique.

Il est à noter que la disposition du réservoir tampon aval permet d'utiliser l'invention avec tout type de générateur de vapeur, c'est-à-dire aussi bien avec un générateur de vapeur contenu en totalité à l'intérieur d'une enveloppe externe unique qu'avec un générateur de vapeur de type modulaire. Dans le premier cas, le réservoir tampon amont est constitué de préférence par un ciel de gaz neutre surmontant le métal liquide secondaire au-dessus de la zone d'échange, dans la partie supérieure de l'enveloppe, alors que, lorsque le générateur de vapeur comporte plusieurs modules d'échange disposés en parallèle, le réservoir tampon amont est disposé dans la conduite aller et communique directement avec la tubulure d'entrée de chaque module d'échange.

On décrira maintenant, à titre d'exemples non limitatifs, différents modes de réalisation de l'invention en se référant aux dessins annexés dans lesquels:

- la figure 1, déjà décrite, représente de façon schématique une boucle d'un circuit de refroidissement secondaire d'une centrale nucléaire à neutrons rapides réalisée selon la technique actuelle,

- la figure 2, est une vue comparable à la figure 1 représentant un premier mode de réalisation d'une boucle d'un circuit de refroidissement secondaire réalisé conformément à l'invention, et

- la figure 3 représente une variante du circuit de la figure 2 montrant que l'invention peut s'appliquer à un circuit comportant des pompes électromagnétiques et un générateur de vapeur de type modulaire.

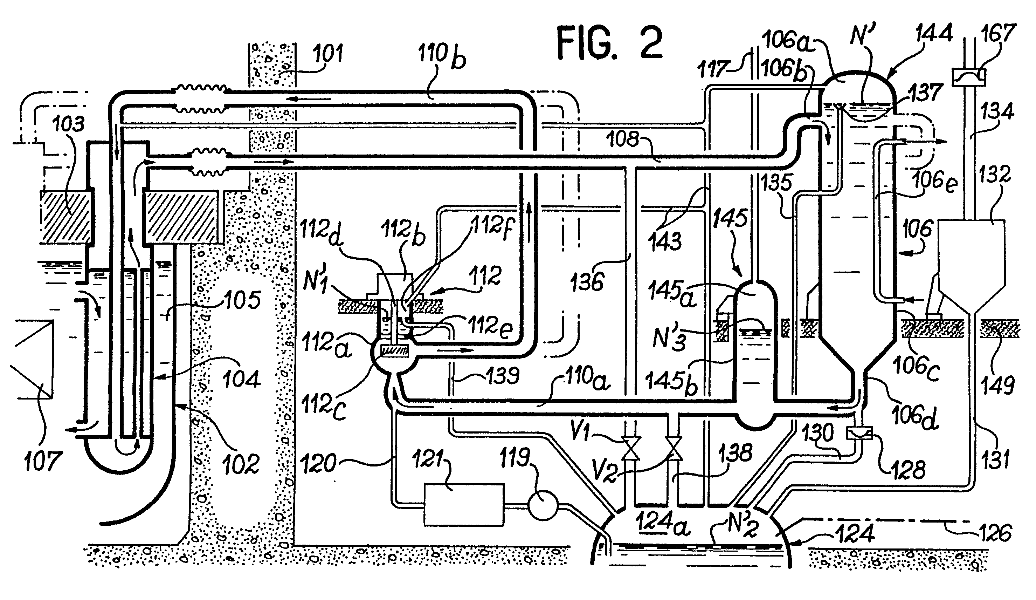

Sur la figure 2, on a représenté de façon simplifiée une boucle d'un circuit secondaire réalisé conformément à l'invention. On voit en particulier sur cette figure une partie du bâtiment réacteur 101 sur laquelle repose une dalle 103 supportant et obturant la cuve 102 du réacteur. Cette cuve 102 est remplie de métal liquide primaire 105 et elle contient de façon connue l'ensemble du circuit primaire du réacteur. En particulier, on a représenté sur la figure 2, à l'intérieur de la cuve principale 102, le coeur 107 du réacteur ainisi que l'un des échangeurs de chaleur 104 servant à transmettre la chaleur extraite du coeur par le sodium primaire 105 au sodium circulant dans le circuit secondaire. Généralement, les échangeurs de chaleur 104 sont suspendus à la dalle 103 de telle sorte que l'ensemble de la zone d'échange baigne dans le sodium primaire 105 et que seule la tête des échangeurs est située au-dessus de la dalle.

A l'extérieur du bâtiment 101, la boucle secondaire représentée sur la figure 2 comprend principalement et de façon connue un générateur de vapeur vertical 106 et une pompe de circulation 112. La tubulure de sortie de la tête de l'échangeur 104 est reliée à la tubulure d'entrée 106b de sodium secondaire du générateur de vapeur 106 par une conduite aller 108. Généralement, la tubulure d'entrée 106b du sodium secondaire dans le générateur de vapeur 106 est située à proximité du dôme supérieur de l'enveloppe externe 106c du générateur, légèrement en-dessous du niveau libre N' de sodium secondaire, ce niveau étant surmonté par une poche d'argon 106a.

De façon connue, le sodium secondaire ainsi introduit dans le générateur de vapeur circule de haut en bas a l'intérieur de l'enveloppe 106c jusqu'à une tubulure de sortie 106d située à l'extrémité inférieure de l'enveloppe. Au cours de ce trajet, le sodium secondaire chemine entre un grand nombre de tubes verticaux tels que 106e dans lesquels circule de bas en haut l'eau sous pression d'un circuit tertiaire eau/vapeur (non représenté). L'eau circulant dans ce dernier circuit se trouve ainsi vaporisée et entraîne des turbines commandant une génératrice de courant électrique.

Le sodium secondaire ainsi refroidi sort du générateur de vapeur 106 par la tubulure 106c et retourne par une conduite retour en deux parties 110a, 110b vers l'orifice d'entrée de la tête de l'échangeur 104. De façon plus précise, la partie 110a de la conduite retour fait communiquer la tubulure de sortie du générateur de vapeur avec l'orifice d'aspiration d'une pompe hydraulique 112 à aspiration axiale et la deuxième partie 110b de la conduite retour fait communiquer l'orifice de refoulement de la pompe avec l'orifice d'entrée de la tête de l'échangeur 104.

Bien entendu, comme on l'a représenté en traits discontinus sur la figure 2, plusieurs échangeurs 104 peuvent être incorporés dans une même boucle du circuit secondaire. Le nombre des conduites 108 et 110b se trouve alors multiplié par ce nombre d'échangeurs.

Toujours de façon connue, le circuit secondaire comprend de plus un réservoir de stockage 124 disposé à la partie inférieure de l'installation de façon à pouvoir recevoir par gravité l'ensemble du sodium contenu dans le circuit secondaire. A cet effet, on relie le point bas de la conduite 108 au réservoir 124 par une conduite 136 et le point bas de la conduite 110a au réservoir 124 par une conduite 138, chacune des conduites 136 et 138 étant contrôlée par une vanne V1 et V2 respectivement.

Afin de permettre le remplissage du circuit secondaire lorsque celui-ci est contenu en totalité dans le réservoir de stockage 124, on prévoit une canalisation d'alimentation 120 dont l'extrémité inférieure plonge dans le sodium contenu dans le réservoir 124 et dont l'extrémité supérieure débouche dans la conduite 110a, à proximité de l'orifice d'aspiration de la pompe 112. La circulation du sodium dans la canalisation 120 est réalisée au moyen d'une pompe 119, généralement de type électromagnétique. On prévoit en outre dans la canalisation 120 des moyens de purification 121 qui peuvent être constitués par exemple par un piège froid d'un quelconque type connu.

Le sodium contenu dans le réservoir de stockage 124 définit un niveau libre N'2 surplombé d'un ciel de gaz inerte 124a tel que de l'argon. La pression de ce ciel d'argon est régulée au moyen d'une canalisation 126, de façon à maintenir conformément à l'invention la pression d'argon dans le réservoir 124 à un niveau de basse pression, par exemple à environ 0,5 bar relatif, quel que soit le régime de fonctionnement.

De façon comparable, le sodium contenu dans l'enveloppe 106c du générateur de vapeur est surmonté d'un ciel d'argon au-dessus de la zone d'échange proprement dite, de façon à définir un niveau libre N' surmonté d'un ciel de gaz inerte 106a. Ce niveau N' est maintenu à une valeur constante au moyen d'une canalisation 135 reliant un tropplein 137 disposé à l'intérieur de l'enceinte 106c du générateur de vapeur à la partie supérieure du réservoir 124.

Dans le mode de réalisation de la figure 2, la pompe 112 est une pompe mécanique comportant un corps de pompe 112a, un moteur d'entraînement 112b, et un rotor 112c entraîné par le moteur au moyen d'un arbre vertical 112d. L'arbre 112d traverse sensiblement à mi-hauteur du corps de pompe une garniture hydraulique 112e constituée par un labyrinthe autorisant une fuite contrôlée de sodium liquide depuis la partie active de la pompe constituée par le rotor situé en-dessous de la garniture 112e vers la zone du corps 112a située au-dessus de cette garniture, tout en assurant une certaine isolation entre ces deux zones. Au-dessus de la garniture 112e, le sodium liquide définit son niveau libre N'1 surmonté d'un ciel de gaz neutre 112f.

Le niveau N'1 est maintenu en permanence à une valeur sensiblement constante à la fois grâce à la canalisation 120 qui permet par une mise en oeuvre de la pompe 119 de pouvoir fonctionner avec une fuite de sodium permanente au travers de la garniture 112e, de façon à éviter tout dénoyage de la pompe, et au moyen d'une canalisation 139 qui relie un trop-plein 141 disposé à l'intérieur du corps de pompe au réservoir 124. Compte tenu de la perte de charge existant au niveau de la garniture 112c, on réalise en outre un découplage entre le sodium contenu dans le circuit secondaire proprement dit et le sodium contenu dans le corps de pompe au-dessus de la garniture. Cette caractéristique importante de ce mode de réalisation de l'invention utilisant une pompe de type mécanique permet de placer celle-ci à n'importe quel niveau et notamment à un niveau relativement bas (voisin de celui de l'extrémité inférieure du générateur de vapeur) comme on l'a représenté sur la figure 2.

Le circuit composé de la canalisation d'alimentation 120 de la pompe 119, et de la canalisation de trop-plein 139, permet d'assurer la fonction expansion lente du sodium en utilisant la réserve de sodium contenue dans le réservoir de stockage 124.

Les atmosphères des grosses capacités que constituent les ciels d'argon 124a du réservoir, 106a du générateur de vapeur et 112f de la pompe sont mises en équilibre de pression au moyen de canalisations de liaison 143. Lorsque la pression établie dans le ciel d'argon du réservoir de stockage 124 est par exemple de 0,5 bar relatif, il en est donc de même de la pression régnant dans les ciels d'argon du générateur de vapeur et de la pompe. Il est à noter que la basse pression qui est ainsi établie dans l'ensemble du circuit secondaire conformément à l'invention permet d'améliorer très sensiblement la sûreté de celui-ci tout en conservant pour la pompe 112 des caractéristiques hydrauliques particulièrement bonnes résultant de la disposition de celle-ci en un point relativement bas de l'installation.

Compte tenu de la suppression du réservoir d'expansion entourant la pompe dans les circuits de la technique antérieure (figure 1) et afin d'éviter la transmission aux échangeurs 104 des ondes de pression pouvant résulter d'une éventuelle réaction sodium/eau dans le générateur de vapeur 106, il est prévu en amont et en aval de la zone d'échange de celui-ci des réservoirs tampons qui sont disposés conformément à l'invention aussi près que possible de cette zone d'échange afin de ne pas créer d'oscillations de grande amplitude à la suite de tels chocs.

De façon connue, lorsque le générateur de vapeur est contenu en totalité dans une enveloppe unique 106c comme l'illustre la figure 2, le réservoir tampon amont 144 est constitué par le ciel de gaz neutre 106a enfermé dans le dôme de l'enveloppe 106c du générateur de vapeur, au-dessus du niveau libre de sodium N'. A cet effet, la hauteur du ciel d'argon est calculée de façon à pouvoir amortir le choc résultant d'une réaction sodium/eau dans le générateur de vapeur.

Conformément à l'invention, le réservoir tampon aval 145 est disposé dans la conduite retour 110a, à proximité immédiate de la tubulure de sortie 106d du générateur de vapeur, c'est-à-dire sensiblement au même niveau que la pompe 112 et que l'extrémité inférieure du générateur de vapeur. Le réservoir 145 comporte une enveloppe 145b sensiblement cylindrique et d'axe vertical, la conduite 110a débouchant à l'extrémité inférieure de cette enveloppe. Le sodium contenu dans le réservoir 145 définit un niveau libre N'3 surmonté d'un ciel d'argon 145a maintenu par une canalisation de régulation 117 à un niveau de pression déterminé supérieur au niveau de pression dans le réservoir 124, dans le générateur de vapeur 106 et dans le corps de pompe 112a. Ainsi, la pression d'argon dans le réservoir 145 peut être d'environ 1 bar relatif lorsque la pression d'argon dans le reste du circuit est de 0,5 bar relatif.

Cette disposition du réservoir tampon aval 145 à proximité immédiate de la sortie du générateur de vapeur 106 permet d'éviter, dans le cas d'une réaction sodium/eau à l'intérieur du générateur, la formation d'oscillations trop importantes dans le circuit de sodium situé entre la sortie du générateur de vapeur et la pompe, et autorise aussi la suppression du réservoir d'expansion associé à la pompe dans le circuit secondaire du type connu représenté sur la figure 1. Cette dernière caractéristique permet notamment, comme on l'a vu précédemment d'utiliser une pompe d'un type quelconque et d'un volume relativement réduit et autorise surtout la mise en place de cette pompe à n'importe quel niveau de l'installation et notamment, de préférence, en position relativement basse.

En complément à ces réservoirs tampons amont et aval, on prévoit de façon conventionnelle d'évacuer les produits résultant d'une éventuelle réaction sodium/eau dans le générateur de vapeur. A cet effet, une canalisation 130 relie la tubulure de sortie 106d du générateur de vapeur à la partie supérieure du réservoir de stockage 124 qui joue alors le rôle de séparateur entre les produits liquides et gazeux. Cette canalisation 130 est normalement obturée par des membranes de grande section 125 qui se rompent en cas de surpression. Dans l'hypothèse où le réservoir 124 serait insuffisant pour effectuer la séparation des effluents liquides et gazeux, on prévoit en outre de relier la partie supérieure de celui-ci à un séparateur 132 par une canalisation 131. Les effluents gazeux sortant du séparateur 132 sont évacués dans l'atmosphère par une cheminée 134. Au contraire, les effluents liquides redescendent dans le réservoir 124.

Une membrane 167 permet de maintenir sous gaz neutre la cheminée 134 et le séparateur 132.

On a représenté sur la figure 2 à titre d'exemple le supportage de la pompe 112, du réservoir tampon aval 145, du générateur de vapeur 106 et du séparateur 132 par gravité sur une dalle de béton 149. Bien entendu, cette réalisation n'est pas limitative et tout autre mode de supportage peut être envisagé.

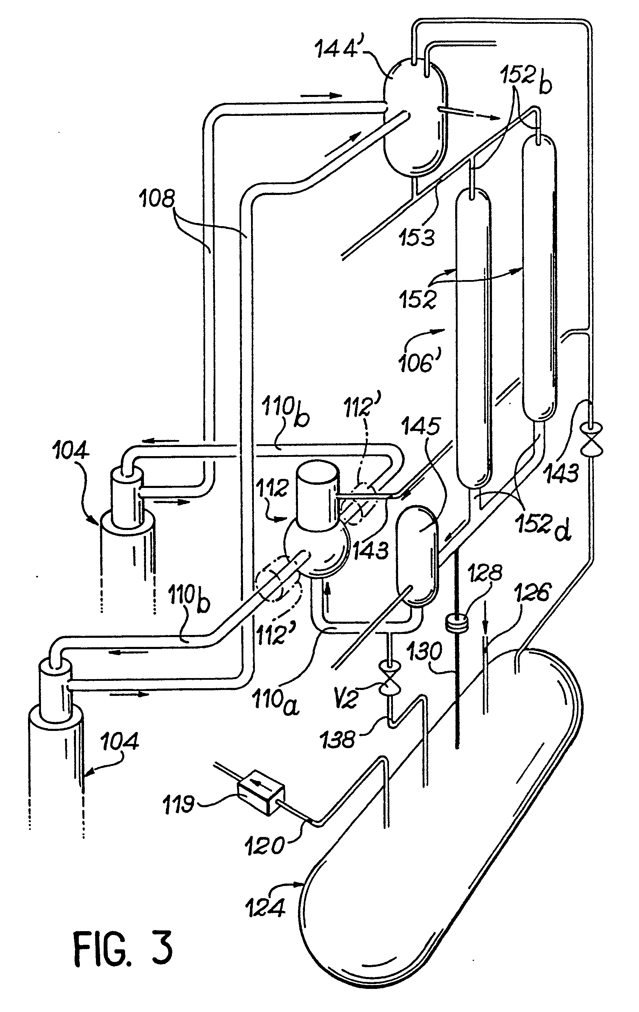

Sur la figure 3, on a représenté en perspective une variante du circuit de la figure 2 illustrant le cas où le générateur de vapeur n'est plus logé dans une enveloppe unique mais est de conception modulaire et montrant également que la pompe mécanique peut le cas échéant être remplacée par une ou plusieurs pompes d'un autre type et notamment électromagnétique.

La boucle du circuit secondaire représentée sur la figure 3 comprend deux échangeurs 104 logés dans la cuve du réacteur (non représentée), un générateur de vapeur 106' constitué comme on le verra ultérieurement d'un certain nombre de modules, une pompe 112 et des conduites aller 108 et retour 110a et 110b. De façon plus précise, les conduites 108 relient la tubulure de sortie de chaque tête d'échangeur 104 à un réservoir tampon amont 144' qui est lui-même relié par différents embranchements d'une conduite relativement courte 153 à la tubulure d'entrée 152b du sodium secondaire formée à l'extrémité supérieure de chacun des modules d'échange 152 disposés en parallèle pour définir le générateur de vapeur modulaire 106'.

Les modules d'échange 152 sont réalisés de façon conventionnelle c'est-à-dire qu'ils comportent une enveloppe externe dans laquelle circule le sodium secondaire et des tubes d'échange disposés à l'intérieur de cette enveloppe et dans lesquels circulent l'eau, puis la vapeur du circuit tertiaire.

Les tubulures de sortie 152d du sodium secondaire formées à l'extrémité inférieure de chacun des modules 152 sont reliées par différents embranchements à la partie 110a de la conduite retour. Comme dans le mode de réalisation de la figure 2, le réservoir tampon aval 145 est disposé dans la partie 110a de la conduite retour, c'est-à-dire entre le générateur modulaire 106' et la pompe 112, aussi près que possible des tubulures de sortie 152d du générateur de vapeur. On évite ainsi conformément à l'invention la formation d'oscillations de grande amplitude en cas de réaction sodium/eau à l'intérieur d'un ou plusieurs des modules du générateur de vapeur.

Comme dans le mode de réalisation précédent, la partie 110a de la conduite retour communique avec la tubulure d'aspiration axiale de la pompe mécanique 112 et les tubulures de refoulement de cette dernière communiquent par des conduites 110b avec chacune des tubulures d'entrée du sodium secondaire dans les têtes des échangeurs 104.

On a représenté en traits mixtes sur la figure 3 une variante selon laquelle la pompe mécanique 112 est remplacée par deux pompes électromagnétiques 112' disposées dans chacune des conduites retour 110b. Bien entendu, cette variante pourrait aussi s'appliquer au mode de réalisation de la figure 2 dans lequel le générateur de vapeur est réalisé de façon compacte à l'intérieur d'une enveloppe unique.

La variante de réalisation représentée sur la figure 3 est par ailleurs identique à celle qui a été décrite précédemment en se référant à la figure 2, même si certains des éléments de ce circuit n'ont pas été représentés sur la figure 3 afin d'en faciliter la compréhension.

On reconnaît cependant sur la figure 3 le réservoir de stockage 124, la canalisation de vidange 138 et sa vanne V2, la canalisation 130 équipée de membranes de rupture 128. On voit aussi une partie de la canalisation 143 reliant le ciel d'argon du réservoir 124 au ciel d'argon du réservoir tampon amont 144' et une autre partie de cette canalisation 143 débouchant dans le ciel d'argon de la pompe 112, lorsque celle-ci est de type mécanique. On a également représenté sur la figure 3 la canalisation 126 permettant de contrôler la pression d'argon dans le réservoir 124, ainsi qu'une partie de la canalisation 120 reliant le réservoir 124 à la conduite 110, et la pompe électromagnétique 119 assurant la circulation du sodium dans cette canalisation.

Bien entendu, l'invention n'est pas limitée aux modes de réalisation qui viennent d'être décrits à titre d'exemple mais en couvre toutes les variantes supportées par les revendications.

**Revendications**

1. Circuit caloporteur secondaire de réacteur nucléaire refroidi par métal liquide, comprenant au moins un échangeur de chaleur primaire (104) logé dans la cuve (102) du réacteur, un générateur de vapeur vertical (106, 106') extérieur à ladite cuve, une conduite aller (108) reliant une tubulure de sortie de l'échangeur de chaleur à au moins une tubulure d'entrée (106b, 152b) du générateur de vapeur, une conduite retour (110a, 110b) reliant au moins une tubulure de sortie (106d, 152d) du générateur de vapeur à une tubulure d'entrée de l'échangeur de chaleur, une pompe de circulation (112, 112') d'un métal liquide secondaire contenu dans ledit circuit, disposée dans la conduite retour, un réservoir tampon amont (144, 144') disposé dans ledit circuit en amont de la zone d'échange du générateur de vapeur, et un réservoir de stockage (124) du métal liquide secondaire jouant aussi le rôle d'un réservoir tampon aval disposé en aval de la zone d'échange de générateur de vapeur et mis en communication avec le reste du circuit des moyens (126) étant prévus pour établir une première pression de gaz neutre au-dessus du niveau libre (N'2) de métal liquide secondaire contenu dans le réservoir de stockage (124) et dans le réservoir tampon amont (144, 144') caractérisé en ce qu'un réservoir tampon aval (145) est disposé dans la conduite retour (110a) entre le générateur de vapeur (106, 106') et la pompe de circulation (112, 112'), à proximité immédiate de la tubulure de sortie (106d, 152d) du générateur de vapeur, des moyens (147) étant prévus pour établir une deuxième pression de gaz neutre au-dessus du niveau libre (N'3) de métal liquide secondaire contenu dans le réservoir tampon aval (145), cette deuxième pression étant supérieure à ladite première pression.

2. Circuit selon la revendication 1, caractérisé en ce que la pompe de circulation est une pompe mécanique à aspiration axiale comportant un corps de pompe (112a) et un moteur (112b) commandant la rotation d'un rotor (112c) dans le corps de pompe par l'intermédiaire d'un arbre vertical (112d) traversant une garniture hydraulique (112e) solidaire du corps de pompe, le métal liquide secondaire définissant un niveau libre (N'1) surmonté d'un ciel de gaz neutre (112) dans la partie du corps de pompe située au-dessus de ladite garniture, ce ciel de gaz neutre étant relié aux ciels de gaz neutre (respectivement 124a et 106a) du réservoir de stockage (124) et du réservoir tampon amont (144, 144').

3. Circuit selon la revendication 2, caractérisé en ce qu'il comprend de plus des moyens de régulation (120, 139) du niveau de métal liquide secondaire dans le corps de pompe (112a), ces moyens de régulation comportant une canalisation d'alimentation (120) reliant le réservoir de stockage (124) à la conduite retour (110a) entre le générateur de vapeur (106) et la pompe (112), une canalisation d'évacuation (139) reliant un trop-plein formé dans le corps de pompe au-dessus de la garniture hydraulique (112e) au réservoir de stockage, et des moyens (119) pour faire circuler en permanence le métal liquide secondaire dans lesdites canalisations, afin de pouvoir fonctionner avec une fuite permanente de métal liquide secondaire au travers de la garniture hydraulique de la pompe vers le réservoir de stockage.

4. Circuit selon la revendication 3, caractérisé en ce que les moyens (119) pour faire circuler en permanence le métal liquide secondaire dans les canalisations sont constitués par une pompe électromagnétique.

5. Circuit selon la revendication 1, caractérisé en ce que la pompe de circulation est une pompe électromagnétique (112').

6. Circuit selon l'une quelconque des revendications 1 à 5, caractérisé en ce que le générateur de vapeur (106) comporte une enveloppe externe (106c) dans laquelle est logé un faisceau de tubes d'échange (106e) définissant la zone d'échange et autour desquels circule le métal liquide secondaire, celui-ci étant surmonté d'un ciel de gaz neutre (106a) au-dessus de ladite zone d'échange, dans la partie supérieure de l'enveloppe, qui constitue ainsi le réservoir tampon amont (144).

7. Circuit selon l'une quelconque des revendications 1 à 5, caractérisé en ce que le générateur de vapeur (106') comporte plusieurs modules d'échange (152) disposés en parallèle pour définir la zone d'échange, un réservoir tampon amont (144') étant disposé dans la conduite aller (108) et communiquant directement avec la tubulure d'entrée (152b) de chaque module d'échange.

**Patentansprüche**

1. Sekundär-Wärmeträgerkreis eines durch flüssiges Metall gekühlten Kernreaktors, mit wenigstens einem im Schutzbehälter (102) des Reaktors untergebrachten Primär-Wärmetauscher (104), einem außerhalb des Schutzbehälters angeordneten senkrechten Dampferzeuger (106, 106'), einer ein Auslaßrohr des Wärmetauschers mit wenigstens einem Einlaßrohr des Dampferzeugers verbindenden Zuleitung (108), einer wenigstens ein Auslaßrohr (106d, 152d) des Dampferzeugers mit einem Einlaßrohr des Wärmetauschers verbindenden Rückleitung (110a, 110b), einer in der Rückleitung angeordneten Umwälzpumpe (112, 112') für ein in dem Kreis enthaltenes sekundäres flüssiges Metall, einem an der Zulaufseite des Austauschbereichs des Dampferzeugers in dem Kreislauf angeordneten zulaufseitigen Pufferbehälter (144 144') und einem an der Ablaufseite des Austauschbereichs des Dampferzeugers angeordneten, mit dem übrigen Kreislauf in Strömungsverbindung stehenden Vorratsbehälter (124) für das flüssige sekundäre Metall, welcher außerdem die Rolle eines ablaufseitiger Pufferbehälters spielt, sowie mit Einrichtungen (126) zum Erzeugen eines ersten Drucks eines neutralen Gases über dem freien Spiegel (N'2) des im Vorratsbehälter (124) und im zulaufseitigen Puffebehälter (144, 144') enthaltenen flüssigen Sekundärmetalls, dadurch gekennzeichnet, daß ein ablaufseitiger Pufferbehälter (145) in unmittelbarer Nähe der Auslaßleitung (106d, 152d) des Dampferzeugers (106, 106') zwischen dem Dampferzeuger (106, 106') und der Umwälzpumpe (112, 112') in der Rückleitung (110a) angeordnet ist und daß eine Einrichtung (147) zum Erzeugen eines zweiten Drucks eines neutralen Gases über dem freien Spiegel (N'3) des im ablaufseitigen Pufferbehälter (145) vorhandenen flüssigen Sekundärmetalls vorgesehen ist, wobei der zweite Druck höher ist als der erste Druck.

2. Kreislauf nach Anspruch 1, dadurch gekennzeichnet, daß die Umwälzpumpe eine mechanische Pumpe mit axialer Ansaugung ist, welche einen Pumpenkörper (112a) und einen Motor (112b) für den Drehantrieb eines im Pumpenkörper enthaltenen Läufers (112c) über eine fest mit dem Pumpenkörper verbundene hydraulische Dichtung (112e) durchsetzende senkrechte Welle (112d) aufweist, wobei das flüssige Sekundärmetall in dem oberhalb der Dichtung liegenden Teil des Pumpenkörpers einen freien Spiegel (N'1) bildet, mit einer darüber liegenden Decke (112f) aus dem neutralen Gas, welche mit den Decken aus dem neutralen Gas ( 124a bzw. 106a) im Vorratsbehälter (124) und im zulaufseitigen Pufferbehälter (144, 144') in Verbindung steht.

3. Kreislauf nach Anspruch 2, dadurch gekennzeichnet, daß er zusätzlich eine Einrichtung (120, 139) zum Regeln der Standhöhe des flüssigen Sekundärmetalls im Pumpenkörper (112a) aufweist, wobei die Regeleinrichtung eine den Vorratsbehälter (124) zwischen dem Dampferzeuger (106) und der Pumpe (112) mit der Rückleitung (110a) verbindende Zufuhrleitung (120), eine einen oberhalb der hydraulischen Dichtung (112e) im Pumpenkörper gebildeten Überlauf mit dem Vorratsbehälter verbindende Abflußleitung (139) und eine Einrichtung (119) aufweist, mittels welcher das flüssige Sekundärmetall ständig in den genannten Leitungen umwälzbar ist, so daß ein ständiger Rückfluß des flüssigen Sekundärmetalls über die hydraulische Dichtung des Pumpenkörpers zum Vorratsbehälter stattfinden kann.

4. Kreislauf nach Anspruch 3, dadurch gekennzeichnet, daß die Einrichtung (119) für die ständige Umwälzung des flüssigen Sekundärmetalls in den Leitungen durch eine elektromagnetische Pumpe gebildet ist.

5. Kreislauf nach Anspruch 1, dadurch gekennzeichnet, daß die Umwälzpumpe eine elektromagnetische Pumpe (112') ist.

6. Kreislauf nach einem der Ansprüche 1 bis 5, dadurch gekennzeichnet, daß der Dampferzeuger (106) einen äußeren Mantel (106c) und ein darin angeordnetes Bündel von Austauschrohren (106e) aufweist, welche den Austauschbereich darstellen und von dem flüssigen Sekundärmetall umströmt sind, wobei über diesem im oberen Teil des Mantels und oberhalb des Austauschbereichs eine Decke (106a) aus dem neutralen Gas liegt, so daß auf diese Weise der zulaufseitige Pufferbehälter (144) gebildet ist.

7. Kreislauf nach einem der Ansprüche 1 bis 5, dadurch gekennzeichnet, daß der Dampferzeuger (106') mehrere zur Bildung des Austauschbereichs parallel angeordnete Austauscheinheiten (152) aufweist, wobei ein zulaufseitiger Pufferbehälter (144') in der Zuleitung (108) angeordnet und direkt mit der Einlaßleitung (152b) jeder Austauscheinheit strömungsverbunden ist.

## Claims

1. Secondary heat transport circuit in a liquid cooled nuclear reactor, comprising at least one primary heat exchanger (104) housed in the vessel (102) of the reactor, a vertical steam generator (106, 106') outside said vessel, a flow pipe (108) connecting an outlet connection of the heat exchanger to at least one inlet connection (106b, 152b) of the steam generator, a return pipe (110a, 110b) connecting at least one outlet connection (106d, 152d) of the steam generator to an inlet connection of the heat exchanger, a circulation pump (112, 112') for a secondary liquid metal contained in said circuit, said pump being disposed in the return pipe, an upstream buffer tank (144, 144') disposed in said circuit upstream of the exchange zone of the steam generator, and a secondary liquid metal storage tank (124) also serving as downstream buffer tank disposed downstream of the exchange zone of the steam generator and in communication with the remainder of the circuit, means (126) being provided for establishing a first neutral gas pressure above the free level (N'2) of secondary liquid metal contained in the storage tank (124) and in the upstream buffer tank (144, 144'), characterized in that a downstream buffer tank (145) is disposed in the return pipe (110a) between the steam generator (106, 106') and the circulation pump (112, 112') in the immediate proximity of the outlet connection (106d, 152d) of the steam generator, means (147) being provided to establish a second neutral gas pressure above the free level (N'3) of secondary liquid metal contained in the downstream buffer tank (145), said second pressure being higher than said first pressure.

2. Circuit according to Claim 1, characterized in that the circulation pump is a mechanical axial-suction pump comprising a pump body (112a) and a motor (112b) driving a rotor (112c) in the pump body with the aid of a vertical shaft (112d) passing through a hydraulic seal (112e) fastened to the pump body, the secondary liquid metal defining a free level (N'1) lying under a roof of neutral gas (112f) in that part of the pump body which is situated above said seal, this roof of neutral gas being connected to the roofs of neutral gas (124a and 106a respectively) in the storage tank (124) and upstream buffer tank (144, 144').

3. Circuit according to Claim 2, characterized in that it comprises in addition means (120, 139) for regulating the level of secondary liquid metal in the pump body (112a), said regulation means comprising a supply pipe (120) connecting the storage tank (124) to the return pipe (110a) between the steam generator (106) and the pump (112), an evacuation pipe (139) connecting an overflow formed in the pump body above the hydraulic seal (112e) to the storage tank, and means (119) for permanently circulating the secondary liquid metal in said pipes in order to make it possible to operate with a permanent leakage of secondary liquid metal through the hydraulic seal of the pump to the storage tank.

4. Circuit according to Claim 3, characterized in that the means (119) for permanently circulating the secondary liquid metal in the pipes consists of an electromagnetic pump.

5. Circuit according to Claim 1, characterized in that the circulation pimp is an electromagnetic pump (112').

6. Circuit according to any one of Claims 1 to 5, characterized in that the steam generator (106) has an outer casing (106c) in which is housed a bundle of exchange tubes (106e) defining the exchange zone, around which tubes the secondary liquid metal circulates, the latter lying under a roof of neutral gas (106a) above said exchange zone, in the top part of the casing which thus constitutes the upstream buffer tank (144).

7. Circuit according to any one of Claims 1 to 5, characterized in that the steam generator (106') comprises a plurality of exchange modules (152) disposed in parallel to define the exchange zone, an upstream buffer tank (144') being disposed in the flow pipe (108) and communicating directly with the inlet connection (152b) of of each exchange module.

FIG. 1

# FIG. 2

0 104 994

FIG. 3